# EUROPEAN PATENT APPLICATION

(11) **EP 2 134 102 A1**
(43) Date of publication of application: **16.12.2009**
(21) Application number: 08714911.8
(22) Date of filing: 07.03.2008
(51) Int. Cl.: H04Q 7/22

(54) **METHOD, SYSTEM AND DEVICE FOR RELEASING INTERNET PROTOCOL CONNECTING LOADING IN COMMUNICATION SYSTEM**

(30) Priority: 12.03.2007 CN 200710064344
(71) Applicant: Da Tang Mobile Communications Equipment Co., Ltd., Beijing 100083 (CN)
(72) Inventor: XIONG, Chunshan, Beijing 100083 (CN); JIANG, Yihua, Beijing 100083 (CN); XU, Hui, Beijing 100083 (CN); XI, Jiande, Beijing 100083 (CN); LIANG, Huarui, Beijing 100083 (CN)
(74) Representative: Pfenning, Meinig & Partner GbR
(86) International application number: PCT/CN2008/000458
(87) International publication number: WO 2008/110064

(57) **Abstract**

A method for releasing an internet protocol connecting loading in a communication system includes: releasing the first internet protocol connecting loading and its corresponding connecting loading channel; judging whethert he internet protocol address of a user equipment is associated with the second internet protocol connecting loading; if it isc onfirmed that the internet protocol address of the user equipment is associated with the second internet protocol connecting loading, then reserving the internet protocol address of the user equipment. Additionally, a system and a device for releasing the internet protocol connecting loading in the communication system are provided.

## Description

### Field of the Invention

The present invention relates to a data transmission technology in the field of communications and in particular to a method, system and device for deleting a bearer ofa n Internet Protocol connection in a communication system.

### Background of the Invention

Networks of the mobile communication standardization organization for Third Generation Partner Project (3GPP) will necessarily be widely applied in various fields as they gradually develop. However, non-3GPP systems currently are still in wide use. Therefore, the 3GPP networks and the non-3GPP systems will coexist in a future period of time.

As prescribed in the 3GPP protocol, Packet Data Protocol (PDP) addresses will be deleted along with all PDP contexts upon initiation ofa PDP deactivation process. However, discontinuity of a service may result from the deletion of PDPa ddresses when a User Equipment (UE) accesses plural access networks, for example, during its handover between different access networks. For example, when the UE is handed over from a traditional 3GPP network to a non-3GPP system, if the UE has activated PDP contexts in the traditional 3GPP network, then a Packet Data Network Gate Way (PDN GW) will delete all the PDP contexts when the handover is carried out, and PDP addresses associated therewith will also be deleted along with connections of all these PDP contexts, so that the service will be interrupted after the handover.

In a 3GPP evolution system, at least one default 3GPP System Architecture Evolution (SAE) bearer will be activated upon registration of a UE, and when possibly more than one 3GPP SAE bearer may be activated, more than one Internet Protocol (IP) address may be allocated. When the UE is handed over from the 3GPP evolution system to a non-3GPP one, bearer connection channels of the General packet radio service Tunneling Protocol (GTP) in the 3GPP system (i.e., the SAE bearer) and also the IP address allocated for the UE willb e deleted. Since the UE is subject to only the handover between the networks but not termination of the service, continuity of the service activated for the UE may be broken due to the deletion of the IP addresses.

### Summary of the Invention

Embodiments of the invention provide a method, system and device for deleting a bearer of an IP connectioni n a communication system so as toa ddress the problem that continuity of a service activated for a UE may be broken upon the deletion of the bearer of the IP connection.

A method for deleting a bearer of an IP connection includes:
deleting a bearero f a first IP connection and the corresponding connection channel of the bearer;
determining whether an IP address of a UE is associated with at least one bearer of a second IP connection; and
preserving the IP address oft he UE if the IP address oft he UE is determined to be associated with atl east one bearer of the second IP connection.

Bearers of the first IP connection corresponds to more than one connection channel of the bearers of the first IP connection, and bearers of the second IP connection corresponds to more than one connection channel of the bearers of the second IP connection.

A condition for the deletion of the bearer of the first IP connection and the corresponding connection channel of the bearer includes:
determining whether the type or IP address ofa n accessn ode is changed, and if so, then deleting the bearero f the first IP connection and the corresponding connection channel of the bearer; or
determining whether the type of a bearer connection channel with an access network accessed by the UE is changed, and if so, then deleting the bearer of the first IP connection and the corresponding connection channel of the bearer; or
deleting the bearer of the first IP connection and the corresponding connection channel of the bearer upon reception of a request message sentf orm the UE.

Ther equest message includes a Mobile IP registration request message, a binding requestm essage or a General packet radio service Tunneling Protocol control request message.

The communication system includes a control entity, a radio access user plane entity and a radio access network entity, and the deletion of the bearero f the first IP connection and the corresponding connection channel of the bearer includes:
sending, by the radio access user plane entity uponr eceptiono f a Delete Bearer Request message sent from the control entity, a Delete Radio Access Bearer Request message to the radio access network entity;
deleting, by the radio access network entity, its bearer with the radio access user plane entity, and sending a Delete Radio Access Bearer Response message to the radio access user plane entity; and
deleting, by the radio access user plane entity, its bearer with the control entity.

The communication system further includes a mobility management entity, and
the Delete Radio Access Bearer Request message is sent to the radio access network entity through the mobility management entity, and the Delete Radio Access Bearer Response message to the radio access user plane entity through the mobility management entity.

The IP address of the UE is deleted when the IP address of the UE is not associated with any bearer connection channel corresponding to the bearers of the second IP connection.

Before the deletion of the bearer of the first IP connection and the corresponding connection channel of the bearer,t he method further includes:
establishing at least one bearer connection channelw ith an access network accessed by the UE, and associating the IP address of the UE with the at least one bearer connection.

A system for deleting a bearer of an IP connection in a communication system includes:
a control entity adapted to determine whether an IP address of a UE is associated with at least one bearero f a second IP connection and to preserve the IP address of the UE if the IP address of the UE is determined to be associated with at least one bearer of the second IP connection; and
a radio access user plane entity adapted to delete a bearero f a first IP connection and the corresponding connection channel of the bearer.

The control entity includes a first determination unita nd a Preservation unit, wherein:
the first determination unit is adapted to determine whether the IP address of the UE is associated with at least one bearer of the second IP connection and to send a determination result to the Preservation unit; and
the Preservation unit is adapted to preserve the IP address of the UE if the IP address of the UE is determined to be associated with at least one bearer of the second IP connection.

The control entity further includes:
a second determination unit adapted to determine whethert he type of or IP address of an access node is changed and to trigger the radio access user plane entity if the type or address is changed; or
adapted to determine whether the type of its bearerc onnection channel with an access node is changed and to trigger the radio access user plane entity if the type is changed; or
adapted to trigger the radio access user plane entity uponr eceptiono f a request message sent from the UE.

The system further includes a radio access network entity, andt he control entity further includes:
a sending unit adapted to send a Delete Bearer Request message to the radio access user plane entity;
the radio access user plane entity includes:
a first reception unit adapted to receive the Delete Bearer Request message and a Delete Radio Access Bearer Response message sent from the radio access network entity;
a first sending unit adapted to send a Delete Radio Access BearerR equest message to the radio access network entity; and
a first deletion unit adapted to delete its bearer with the control entity; and
the radio access network entity includes:
a second reception unit adapted to receive the Delete Radio Access Bearer Request message;
a second deletion unit adapted to delete its bearer with the radio access user plane entity; and
a seconds ending unit adapted to sendt he Delete Radio Access Bearer Response message to the radio access user plane entity.

The system further includes:
a forwarding unit adapted to forward the Delete Radio Access Bearer Request message to the radio access network entity and the Delete Radio Access Bearer Response message to the radio access user plane entity.

The control entity further includes:
a third deletion unit adapted to delete the IP address of the UE when the IP address of the UE is not associated with any bearer connection channel corresponding to the bearers of the second IP connection.

The control entity further includes:
an association creating unit adapted to establish at least one bearer connection channel with an access network accessed by the UE and to associate the IP address of the UE with the at least one bearer connection.

A control entity includes a first determination unit and a Preservation unit, wherein:
the first determination unit is adapted to determine whether an IP address of a UE is associated with at least one bearer of a second IP connection and to send a determination result to the Preservation unit; and
the Preservation unit is adapted to preserve the IP address of the UE if the IP address of the UE is determined to be associated with at least one bearer of the second IP connection.

The control entity further includes:
a second determination unit adapted to determine whethert he type or IP address of an access node is changed and to determine a bearer of an IP connection to be deleted if the type or address is changed; or
adapted to determine whether the type of its bearerc onnection channel with an access node is changed and to determine a bearer of an IP connection to be deleted if the type is changed; or
adapted to determine a bearer ofa n IP connection to be deleted upon reception ofa requestm essage sent from the UE.

The control entity further includes:
a deletion unit adapted to delete the IP address of the UE when the IP address of the UE isn ot associated with any bearer connection channel corresponding to the bearers oft he second IP connection.

The control entity further includes:
an association creating unit adapted to establish at least one bearer connection channel with an access network accessed by the UE and to associate the IP address of the UE with the at least one bearer connection.

The invention applies a method in which associations between the IP address oft he UE and the bearerc onnection channels are created, then a bearero f the first IP connection and the corresponding connection channel of the bearer are deleted, and the IP address of the UE is reversed ift he IP address of the UE is associated with at least one bearer connection channel corresponding to the bearers of the second IP connection, so that continuity of a service activated for the UE can be ensured while deleting a bearer of an IP connection.

### Brief Description of the Drawings

Fig.1 is a schematic structural diagram of a system according to an embodiment of the invention;

Fig.2 is a schematic flow diagram of operations for deleting a bearer of an IP connection in a firste mbodiment of the invention; and

Fig.3 is a schematic structural diagram of a control entity according to the invention.

### Detailed Description of the Embodiments

In embodiments of the invention, firstly bearer connection channels are established with respective access networks accessed by a UE and are associated with an IP address of the UE; and at this time if bearers of an IP connection are determined by a trigger condition to be deleted, then firstly the bearers of the first IP connection and the corresponding connection channels ofthe bearers are deleted, and it is further determined whether the IP address of the UE is also associated with at least one bearer of anotherI P connection, and if the IP address of the UE is determined to be associated with at least one bearer of the second IP connection, then the IP address of the UE is preserved, thereby ensuring continuity of a service activated for the UE while deletingt he bearers of the IP connection. Otherwise, if the IP address of the UE is associated with none of the other bearer connection channels, then the IP address of the UE is deleted, thereby ensuring the proper deletion ofthe IP address of the UE.

The inventive method will be detailed below with reference to the drawings.

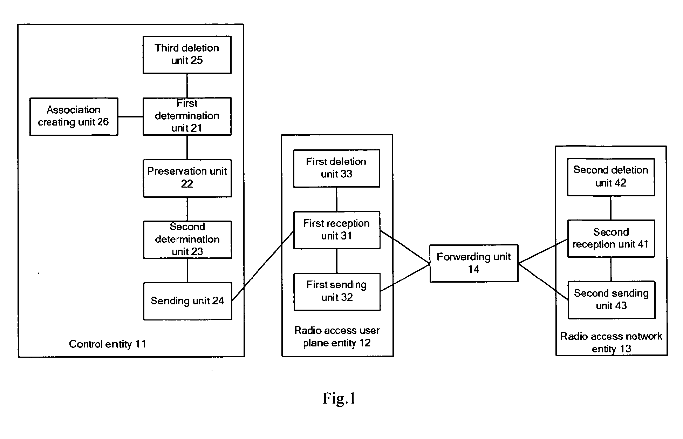

As illustrated in Fig.1 showing a schematic structural diagram of a system according to an embodiment of the invention, the system includes a control entity 11 and a radio access userp lane entity 12, where the control entity 11 is adapted to determine whethera n IP address of a UE is associated with at least one bearero f a second IP connection and to preserve the IP address of the UE if the IP address of the UE is determined to be associated with at least one bearer of the second IP connection, and the radio access user plane entity 12 is adapted to delete bearer(s) of a first IP connection and the corresponding connection channel(s) of the bearer(s).

In the inventive system, the bearers of the first IP connection may correspond to more than one connection channel of the bearers, and bearers of the second IP connection also may correspond to more than one connection channel of the bearers.

The control entity 11 includes a first determination unit 21 and a Preservation unit 22, where the first determination unit 21 is adapted to determine whether the IP address of the UE is associated with at least one bearer of the second IP connection and to send a determination result to the Preservation unit 22, and the Preservation unit 22 isa dapted to preserve the IP address of the UE if the IP address of the UE is determined to be associated with at least one bearer of the second IP connection.

The control entity 11 further includes a second determination unit 23 adaptedt o determine whether the type of or IP address of an access node is changed and to trigger the radio access user plane entity 12 if the type or address is changed; or adapted to determine whether the type of its bearer connection channel with an access node is changed and to trigger the radio access user plane entity 12 ift he type is changed; or adapted to trigger the radio access user plane entity 12 upon reception of a request message sentf rom the UE.

The system further includes a radio access network entity 13, and then the control entity 11 further includes a sending unit 24 adapted to send a Delete Bearer Request message to the radio access user plane entity 12, and the radio access user plane entity 12 includes a first reception unit 31, a first sending unit 32 and a first deletion unit 33, where the first reception unit 31 is adapted to receive the Delete Bearer Request message and a Delete Radio Access Bearer Response message sent from the radio access network entity 13, the first sending unit 32 is adapted to send a Delete Radio Access BearerR equest message to the radio access network entity 13, and the first deletion unit 33 is adapted to delete its bearer(s) with the control entity 11. The radio access network entity 13 includes a second reception unit 41, a second deletion unit 42 and a second sending unit 43, where the second reception unit 41 is adapted to receive the Delete Radio Access Bearer Request message, the second deletion unit 42 is adapted to delete its bearer(s) with the radio access user plane entity 12, and the second sending unit 43 is adapted to send the Delete Radio Access Bearer Response message to the radio access user plane entity 12.

The system further includes a forwarding unit 14 adapted to forward the Delete Radio Access Bearer Request message to the radio access network entity 13 and the Delete Radio Access Bearer Response message to the radio access user plane entity 12.

The controle ntity 11 further includes a third deletion unit 25 adapted to delete the IP address of the UE when the IP address of the UE is not associated with any bearer connection channel corresponding to the bearers of the second IP connection.

The control entity 11 further includes an association creating unit 26 adapted to create bearer connection channel(s) with an access network accessed by the UE and to associate the IP address of the UE with the bearer connection(s).

The inventive method will be detailed below in connection with specific embodiments thereof.

In an embodiment of the invention, the control entity may be a Packet Data Network Gate Way (PDN GW). For a traditional 3GPP system, a Mobility Management Entity (MME) and a radio access User Plane Entity (UPE) are located at aS erving General packet radio service Support Node (SGSN). For an evolved 3GPP system, the UPE is a Serving SAE Gate Way (SAE GW). The PDN GW, which is a network entity in a communication network, is a node where a UE isi nterconnected with an external data network. The PDW GW refers to a Gateway General packet radio service Support Node (GGSN) for the traditional 3GPP system and to a Packet Data Network 3GPP System Architecture Evolution serving Gate Way (PDN SAE GW) for the evolved 3GPP system. A Radio Access Network (RAN) entity not only includes a Universal Terrestrial Radio Access Network (UTRAN) or a Global System for Mobile communication (GSM)/Enhanced Data rate for GSM Evolution (EDGE) Radio Access Network (GERAN) in the traditional 3GPP system but also can be a radio access network entity in the evolved 3GPP system. A non-3GPP system includes IP access-based mobile networks, e.g., a Wireless Local Area Network (I-WLAN), World Interoperability forM icrowave Access (Wimax), etc., interconnected with the traditional3 GPP system. The bearer of an IP connection refers to a PDP context connection for the traditional 3GPP system, to a bearer of the SAE system for the evolved 3GPP system and to a specific IP bearer of the non-3GPP system for the non-3GPP system. The UPE may or may not be integrated with the PDN GW into a single entity, but in an embodiment of the invention, the UPE and the PDN GW operates separately, and when they are integrated into a single entity, interaction between them will be equivalent to interaction internal to that entity.

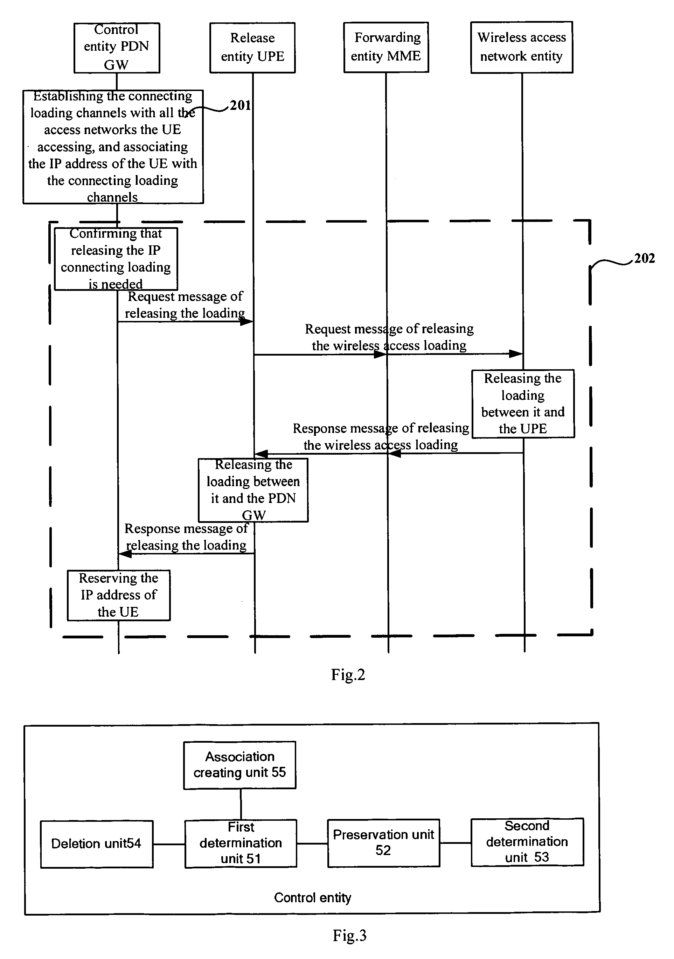

As illustrated in Fig.2 showing a schematic flow chart of operations for deleting a bearer of an IP connection during a 3GPP-to-non-3GPP handover in a first embodiment of the invention, the method includes:

Operation 201: A PDN GW establishes bearer connection channels with respective access networks accessed by a UE and associates an IP address of the UE with the bearer connection channels.

In this embodiment, the UE firstly accesses a 3GPP network,t he PDN GW establishes bearer connection channels with the 3GPP network and associates the IP address of the UE with the bearer connection channels, and the UE has activated at least one SAE bearer in the 3GPP network. When the UE is handed over from the 3GPP network to a non-3GPP network, at this time the UE gains an access to the non-3GPP access network, and the PDN GW will establish bearer connection channels with the non-3GPP network. Ofc ourse, ift he UE accesses plural access networks concurrently instead of being handed over between two networks, then the PDN GW will establish bearer connection channels with respective networks.

Since the IP address of the UE is allocated by the PDN GW, the PDN GW can create an association between the IP address of the UE and the respective bearerc onnection channels after the establishing the bearer connection channels with the respective access networks. The so-called creating of an association refers to saving correspondence relationships between the IP address of the UE and the respective bearer connection channels.

The invention has been described in the embodiments of the invention taking a handover between 3GPP and non-3GPP networks as an example, but numerous practical handover methods are possible. For example, an RAN can send a handover request command to the UE, and a radio resource between the RAN and the UE will be deleted when the UE receives the handover requestc ommand.

Operation 202: The PDN GW upon determination of deleting bearers of an IP connection deletes the bearers of the first IP connection and the corresponding connection channels of the bearers, determines whether the IP address of the UE is associated with at least one bearer of a second IP connection, and preserves the IP address of the UE if the IP address of the UE is determined to be associated with at least one bearer of the second IP connection or otherwise deletes the IP address of the UE. The bearers of the first IP connection may correspond to more than one connection channel of the bearers, and the bearers of the second IP connection also may correspond to more than one connection channel of the bearers.

The PDN GW may determine bearers of an IP connection to be deleted in various ways, and in an embodiment of the invention taking a handover of the UE from a 3GPP system to a non-3GPP system as an example, it is firstly checked whether the UE has been handed over to the non-3GPP system, and if so, then the bearers of an IP in the 3GPP system is determined to be deleted. The checking method may include the following:

1. The PDG GW determines whether to delete bearers of an IP connection by determining whether the type or IP address of an access node is changed, and if so, then the bearers of the IP connection will be deleted.

Likewise, when the UE is handed over from the non-3GPP system to the 3GPP system, the PDN GW determinesw hether the UE hasb een handed over by determining whether the type or IP address of an access node used for the UE has been changed. For example, the PDN GW can determine from a change in an IP address of an SGSN that the UE has been handed overa nd then can furtherd etermine bearers of an IP connection to be deleted at this time. The SGSN is a core network access node of the UE in the 3GPP system, and an access node in the non-3GPP access network may be denominated differently as the type of network varies.

Therefore, whether the UE has been handed over can be easily determined by setting a list of correspondence relationships between IP addresseso f and denominationso f an access node. Of course, a determination process in view of a change in the type of an access node may be similar thereto.

2. The PDN GW determines whether to delete bearers of an IP connection by determining whethert he type of its bearerc onnection channel with an access node is changed, and if so, then the bearers ofthe IP connection will be deleted.

The type of a bearer connection channel between the PDN GW and an access node in a respective one of the networks will be changed when the UE is handed over. For example, the type of a bearer connection channel between the PDN GW and an access node in the 3GPP network is a GTP bearer, and the type of a bearer connection channel between the PDN GW and an access node in the non-3GPP network is a Mobile IP (MIP) or Proxy Mobile IP (PMIP) tunnel. When the PDN GW determines a change in the type of bearer connection channel from a GTP tunnel to an MIP tunnel, a handover of the UE from the 3GPP network to the non-3GPP network can be determined. On the contrary, a handover of the UE from the non-3GPP network to the 3GPP network can be determined if the PDN GW determines a change in the type of bearer connection channel from an MIP tunnel to a GTP tunnel. Bearers of an IP connection can be determined to be deleted by determining the handover process.

3. The PDN GW determines bearers of an IP connection to be deleted upon reception of a request message sent from the UE, which in this embodiment may include anM IP registration request message, a binding requestm essage or a GTP control request message.

When the UE is handed over from the 3GPP network to the non-3GPP network by the MIP protocol, the UE will send an MIP registration request message or a binding message to the PDN GW, and at this time the PDN GW is Home Agent (HA)-enabled and determines the handover oft he UE from the 3GPP network to the non-3GPP network upon reception of the MIP registration request message or the binding message sent from the UE. On the contrary, the PDN GW determines a handover of the UE from the non-3GPP network to the 3GPP network upon reception of a GTP control requestm essage.

Upon determination of the handover of the UE to the non-3GPP network, the PDN GW will determine bearers of an IP connection in the 3GPP system to be deleted. The determination method may be as the following process: the PDN GW checks whethera bearer of an IP connection in the 3GPP system is present in a user plane context of the UE, and if so, then it indicates that there is an undeleted bearer of an IP connection in the 3GPP system; otherwise, it indicates absence thereof and the process ends. Particularly, if the 3GPP system is an evolved 3GPP system, then it is determined whether an SAE bearer context is present, and if it is a traditional 3GPP system, then it is determined whether a PDP context is present. Moreover, since the UE may use plural PDN GWs in the 3GPP system, each of the PDN GW used for the UE will check whether the UE has an undeleted bearero f an IP connection in the 3GPP.

Upon determination of presence of bearers of an IP connection to be deleted, firstly the bearers of the IP connection can be deleted, and then it can be determined whethert o preserve the IP address allocated for the UE.

In this embodiment, the PDN GW establishes the bearer connection channels with the respective access networks accessed by the UE and associates the IP address of the UE with the respective bearer connection channels. Ift he 3GPP system is an evolved 3GPP system, when the PDN GW determines that the UE has an undeleted SAE bearer, the PDN GW sends to an UPE a Delete SAE Bearer Request containing a parametero f reason to indicate a handover of the UE from the 3GPP network to the non-3GPP access network. The UPE upon reception of the Delete Bearer Request message in turn sends a Delete Radio Access Bearer (RAB) Request message to an RAN through an MME, the RAN upon reception of the Delete Radio Access Bearer Request message deletes its bearersw ith the UPE and returns a Delete Radio Access Bearer (RAB) Response message to the MME, the MME sends the Delete Radio Access Bearer Response message to the UPE, and then the UPE deletes its bearers with the PDN GW, i.e., a network route configuration resource, e.g., a channel resource between them, and returns a Delete SAE Bearer Response message to the PDN GW

At this time, the deletion of the bearers of the IP connection in the 3GPP network is ended, and then the PDN GW finds and determines that the IP address of the UE is associated with the bearer connection channel of the non-3GPP network, that is, the IP address of the UE remains associated with the bearer connection channel of the non-3GPP network after the bearer connection channel corresponding to the SAE bearer is deleted, so that the PDN GW will not operate to delete the IP address of the UE, that is, operate to preserve the IP address of the UE. Of course, the PDN GW will delete the IP address of the UE upon if it determines that the IP address of the UE is associated with none of the other bearer connection channels.

Of course in an alternative embodiment of the invention, firstly it is checkedo f whether the IP address of the UE corresponding to the SAE bearer to be deleted is associated with the bearer connection channel of the non-3GPP network, and if so, then the IP address is preserved during the deletion of the bearers of the IP connection in the 3GPP network; otherwise, the IP address is also deleted along with the bearers of the IP connection in the 3GPP network.

The method in the embodiments of the invention can be applied to various scenarios of a handover from the 3GPP network to the non-3GPP network, of that from the non-3GPP network to the 3GPP network, of that in the same network, etc. For example in a second embodiment of the invention, after the UE is handed over from the non-3GPP network to the 3GPP network, the UE has in a userp lane context of the PDN GW an IP-Connectivity Access Network (IP-CAN) context in the non-3GPP network, the UE has a GTP bearer connection channel carrying a SAE bearer in the 3GPP, and the PDN GW associates the IP address of the UE with these bearer connection channels; and then the PDN GW can delete the IP-CAN context in the non-3GPP network while preserving instead of deleting the IP address of the UE. However, the IP-CAN context may vary in specific contents as the non-3GPP network varies. When the bearerc onnection channel is a PMIP tunnel, the IP-CAN context may contain PMIP bearerc onnection channel related contents; and when the bearer connection channel is an MIP channel, the PDN GW is HA-enabled, and then the IP-CAN context may be a binding context of the UE at the HA.

In view of the foregoing detailed descriptions of the inventive system and method, the invention further provides a control entity as illustrated in Fig.3, which includes a first determination unit 51 anda Preservation unit 52, where the first determination unit 51 is adapted to determine whether an IP address of a UE is associated with at least one bearer of a second IP connection and to send a determination result to the Preservation unit 52, and the Preservation unit 52 is adapted to preserve the IP address of the UE if the IP address of the UE is determined to be associated with at least one bearer of the second IP connection. Here, the bearers of the second IP connection may correspond to more than one connection channels of the bearers.

The control entity further includes a second determination unit 53 adapted to determine whether the type or IP address of an access node is changed and to determine a bearer of an IP connection to be deleted if the type or address isc hanged; or adapted to determine whether the type of its bearer connection channel with an access node is changeda ndt o determine a bearer of an IP connection to bed eleted if the type is changed; or adapted to determine a bearero f an IP connection to be deleted upon reception of a request message sent from the UE.

The control entity further includes a deletion unit 54 adapted to delete the IP address of the UE when the IP address of the UE is not associated with any bearerc onnection channel corresponding to the bearers of the second IP connection.

The control entity further includes an association creating unit 55 adapted to establish at lest one bearer connection channel with an access network accessedb y the UE and to associate the IP address of the UE with the at least one bearer connection.

With the invention, a network resource used for a UE can be deleted normally as required; continuity of an activated service can be ensured while the UE accesses plural networks; and an IP address oft he UE can be deleted when the IP address oft he UE isn ot associated with any other bearer connection channel.

Evidently, those skilled in the art can make various modifications and variations to the invention without departing from the spirit and scope of the invention. Thus, then invention is intended to encompass these modifications and variations to the invention provided that the modifications and variations come into the scope of the appended claims and their equivalents.

## Claims

1. A method for deleting a bearer of an IP connection in a communication system, comprising:
deleting a bearer of a first IP connection and the corresponding connection channel of the bearer;
determining whether an IP address of a UE is associated with at least one bearer of a second IP connection; and
preserving the IP address of the UE if the IP address of the UE is determinedt o be associated with atl east one bearer of the second IP connection.

2. The method according to claim 1, wherein bearers of the first IP connection corresponds to more than one connection channel oft he bearers; and bearers oft he second IP connection corresponds to more than one connection channel of the bearers.

3. The method according to claim 2, wherein a condition for the deletion of the bearer of the firstI P connection and the corresponding connection channel of the bearer comprises:
determining whether the type or IP address of an access node is changed, and ifs o, then deleting the bearer of the first IP connection and the corresponding connection channel of the bearer; or
determining whether the type of a bearer connectionc hannel with an access network accessed by the UE is changed, and if so, then deleting the bearer of the first IP connection and the corresponding connection channel of the bearer; or
deleting the bearer of the first IP connection and the corresponding connection channel of the bearer upon reception of a request message sent form the UE.

4. The method according to claim 3, wherein the request message comprises a Mobile IP registration request message, a binding request message or a General packet radio service Tunneling Protocol control request message.

5. The method according to claim 1, wherein the communication system comprises a control entity, a radio access user plane entity and a radio access network entity, and the deletion of the bearero f the first IP connection and the corresponding connection channel of the bearer comprises:
sending, by the radio access user plane entity upon reception of a Delete Bearer Request message sent from the control entity, a Delete Radio Access Bearer Request message to the radio access network entity;
deleting, by the radio access network entity, its bearer with the radio access user plane entity, and sending a Delete Radio Access Bearer Response message to the radio access user plane entity; and
deleting, by the radio access user plane entity, its bearer with the control entity.

6. The method according to claim 5, wherein the communication system furtherc omprises a mobility management entity, and
the Delete Radio Access Bearer Request message is sent to the radio access network entity through the mobility management entity, and the Delete Radio Access Bearer Response message to the radio access user plane entity through the mobility management entity.

7. The method according to claim 1, wherein the IP address of the UE is deleted when the IP address of the UE is not associated with any bearer connection channel corresponding to bearers ofthe second IP connection.

8. The method according to claim 1, further comprising: before the deletion of the bearer of the firstI P connection and the corresponding connection channel of the bearer,
Establishing at least one bearer connection channel with an access network accessed by the UE, and associating the IP address of the UE with the at least one bearer connection channel.

9. A system for deleting a bearer of an IP connection in a communication system, comprising:
a control entity adapted to determine whether an IP address of a UE is associated with at least one bearer of a second IP connection and to preserve the IP address of the UE if the IP address of the UE is determined to be associated with at least one bearer of the second IP connection; and
a radio access user plane entity adapted to delete a bearer of a first IP connection and the corresponding connection channel of the bearer.

10. The system according to claim 9, wherein the control entity comprises a first determination unit and a Preservation unit, and wherein:
the first determination unit is adapted to determine whether the IP address of the UE is associated with at least one bearer of the second IP connection and to send a determination result to the Preservation unit; and
the Preservation unit is adapted to preserve the IP address of the UE if the IP address of the UE is determined to be associated with atl east one bearer of the second IP connection.

11. The system according to claim 10, wherein the control entity further comprises:
a second determination unit adapted to determine whether the type of or IP address of an access node is changed and to trigger the radio access user plane entity if the type or address is changed; or
adapted to determine whether the type of its bearer connection channel with an access node is changed and to trigger the radio access user plane entity if the type is changed; or
adapted to trigger the radio access user plane entity upon reception ofa request message sent from the UE.

12. The system according to claim 10, wherein the system further comprises a radio access network entity, and the control entity further comprises:
a sending unit adapted to send a Delete Bearer Request message to the radio access user plane entity;
the radio access user plane entity comprises:
a first reception unit adapted to receive the Delete Bearer Request message and a Delete Radio Access Bearer Response message sent from the radio access network entity;
a first sending unit adapted to send a Delete Radio Access Bearer Request message to the radio access network entity; and
a first deletion unit adapted to delete its bearer with the control entity; and
the radio access network entity comprises:
a second reception unit adapted to receive the Delete Radio Access Bearer Request message;
a second deletion unit adapted to delete its bearer with the radio access user plane entity; and
a second sending unit adapted to send the Delete Radio Access Bearer Response message to the radio access user plane entity.

13. The system according to claim 12, further comprising:
a forwarding unit adapted to forward the Delete Radio Access Bearer Request message to the radio access network entity and the Delete Radio Access Bearer Response message to the radio access user plane entity.

14. The system according to claim 10, wherein the control entity further comprises:
a third deletion unit adapted to delete the IP address of the UE when the IP address of the UE is not associated with any bearer connection channel corresponding to bearers of the second IP connection.

15. The system according to claim 10, wherein the control entity further comprises:
an association creating unit adapted to establish at least one bearer connection channel with an access network accessed by the UE and to associate the IP address of the UE with the at least one bearer connection.

16. A control entity, comprising a first determination unit and a Preservation unit, wherein:
the first determination unit is adapted tod etermine whether an IP address of a UE is associated with at least one bearer of a second IP connection and to send a determination result to the Preservation unit; and
the Preservation unit is adapted to preserve the IP address of the UE if the IP address of the UE is determined to be associated with atl east one bearer of the second IP connection.

17. The control entity according to claim 16, further comprising:
a second determination unit adapted to determine whether the type or IP address of an access node is changed and to determine a bearer of an IP connection to be deleted if the type or address is changed; or
adapted to determine whether the type of its bearer connection channel with an access node is changed and to determine a bearer of an IP connection to be deleted if the type is changed; or
adapted to determine a bearer of an IP connection to be deleted upon reception of a request message sent from the UE.

18. The control entity according to claim 16, further comprising:
a deletion unit adapted to delete the IP address of the UE when the IP address of the UE is not associated with any bearer connection channel corresponding to bearers of the second IP connection.

19. The control entity according to claim 16, further comprising:
an association creating unit adapted to establish at least one bearer connection channel with an access network accessed by the UE and to associate the IP address of the UE with the at least one bearer connection.
